# EUROPEAN PATENT APPLICATION

(11) **EP 0 752 306 A1**
(43) Date of publication of application: **08.01.1997**
(21) Application number: 95870080.9
(22) Date of filing: 05.07.1995
(51) Int. Cl.: B29C 70/52

(54) **Manufacture of pultruded articles**

(71) Applicant: MONSANTO EUROPE S.A., B-1150 Brussels (BE)
(72) Inventor: Binse, Patrick M. P. H., F-388380 Miribel Les Echelles (FR); Campener, Christian B. G., B-1300 Wavre (BE); Dufour, Daniel L., B-1180 Bruxelles (BE)
(74) Representative: Ernst, Hubert G.

(57) **Abstract**

A pultruding manufacturing arrangement is disclosed wherein high volume % levels of reinforcing materials (2) are impregnated in a coating zone (1) at a temperature preferably below 150°C, with chemically reactive polymer forming precursors. The so impregnated reinforcing materials are then progressed, in a loose configuration, with the aid of guiding rolls (4), through a (die-less) polymerization oven (3). The pultruded material can thereafter be passed through a shaping zone (5) to thus confer functionally desirable configurations to the finished pultruded material (6). The temperature in the polymerization oven is preferably maintained above the melting point of the polymerized resin. A preferred resin is nylon 6 which can be manufactured while maintaining an oven temperature of from 220° to 250°C. This arrangement allows a significant increase in manufacturing speed and; the formed articles can serve for profiling applications.

## Description

### Technical field

The invention relates to a process for forming composite plastics by a pultrusion process. More particularly, this invention relates to a pultrusion process which employs chemically reactive precursors of polymer that will wet a core material and then polymerize during a subsequent passage through a polymerization oven.

### Background of the invention

In recent years, the use of pultrusion process for the continuous manufacture of composites has become increasingly common. According to this prior art technique, the core fiber is the reinforcing material which is coated with a liquid solution of polymer or with melted polymer.

European Patent Application 0.384.063 discloses an improved process for preparing composites which comprises combining polymer precursors in a mixer and continuously introducing the resulting mixture, together with reinforcing fibers, into an impregnation chamber. This is referred to as a RIM pultrusion process. The fibers are continuously withdrawn from the chamber into a heated die in which polymerization occurs to form the desired composite.

European Patent Application 0.544.049 discloses a RIM pultrusion process wherein a polyamide forming material is polymerized in a pultrusion die at a temperature above the melting point of the polyamide. This process is conveniently controllable and provides superior finished products. US-A-5.310.610 discloses reinforced polyamide composite material which is suitable for use in molding articles. Reinforcing fibers impregnated with a suitable reaction liquid are coated with a possibly removable layer and subsequently polymerized at temperatures above 120°C, such as 170-200°C. The fiber content of around 30% is selected to allow convenient extrusion.

There is, however, a need for a better wetting of the fibers by the polymeric material together with a high speed of production that is to say increased capacity.

### Summary of the invention

It has now been found that numerous advantages can be obtained from applying a thermoplastic reactive mixture in a coating zone to a fiber reinforcing material, and progressing the impregnated reinforcing material in a polymerization oven whereby the length of the path along which the impregnated fiber is progressed in the oven is increased by guiding rolls or similar devices to thus proceed in a non-linear manner.

### Detailed description of the invention

Accordingly, the present invention is directed to a new process comprising two steps which are performed continuously in two different zones : a coating zone; and a subsequent polymerisation zone. According to one aspect of the invention, an additional shaping zone is also provided. The pultruded articles made in accordance with this invention are particularly suitable for use in profiled articles.

In the coating zone, the fibers, which constitute the reinforcing material, are impregnated by a reactive thermoplastic polymer forming mixture. The reinforcing material is generally present, in the pultruded article, in an amount from 50 volume % to 75 volume %, preferably from 55 volume % to 70 volume %, more preferably from 60 volume % to 70 volume %. The "volume %" figures are expressed in relation to 100% being the sum of the reinforcing material and the thermoplastic polymer resin present in the pultruded article.

In the present description "fibers" means filaments, rovings, strands, woven or nonwoven mats, knitted fabrics which are made of glass, carbon, steel, ceramic fibers, polymers or other natural or synthetic materials. These materials may contain sizes or coatings to promote bonding of the resin component to the reinforcing material.

The preferred reactive polymer forming mixture used in the present invention comprises a monomer, an initiator, a catalyst and optionally polymeric type components which copolymerise with the monomer. Examples of monomers suitable for use in the present invention include, but are not limited to, ε-lactams and ε-lactones with caprolactam being the preferred monomer.

The thermoplastic polymer is therefore preferably a polyamide, more preferably nylon-6 (PA-6).

Examples of catalysts include, but are not limited to, lactam magnesium halides, alkali metal adducts of caprolactam, e.g. sodium, potassium and lithium caprolactamates, aluminium or magnesium caprolactam with added magnesium bromide, alkoxides and the like.

Optional polymeric type components which copolymerize with the monomers include polyoxypropylene polyol, polyoxyethylene polyol, polycaprolactone, polytetrahydrofuran, polybutadiene polyol, polyisoprene polyol, polyisobutylene polyol, poly (C1-C8 alkylene acrylate), poly (C1-C4 dialkylene siloxane) polyol, poly(ethylene-co-propylene)polyol, poly(ethylene-co-carbon monoxide) polyol, and the like. These components forms block copolymers with the polyamide.

In general, the modifiers are amorphous and elastomeric; that is, these segments would manifest a glas transition temperature below 10° C, preferably below -10°C. Preferred modifiers are poly (propylene oxide), polytetrahydrofuran, poly(dimethyl siloxane), and polybutadiene, with poly(propylene oxide) particularly preferred.

The foregoing components are taught by Hedrick et al in U.S. Patents 3,862,262; 4,031,164; 4,034,015; 4,546,147; 4,581,419; 4,584,344; 4,587,305; 4,590,243 and 4,590,244 which are incorporated herein by reference.

Since the thermoplastic resin forming mixture is a reactive mixture the coating device has to be built to avoid any accumulation of polymerized material.

The impregnation can be done by dripping, spraying or by passing the fibers through an injection chamber. An example of injection chamber is described in US Patent 5,294,461.

Preferably a temperature in the range of from 80° to 150° C is maintained in the coating zone, more preferably in the range of from 100° to 130°C.

In the polymerization zone, the mixture impregnating the fibers is polymerized in an oven. The fibers are maintained loose and are passing over a series of rolls or other devices to increase the length of the fibers inside the oven.

The temperature in the oven may be above or below the melting temperature of the finished polymer. However if the temperature is below the melting temperature, the flexibility of the coated fibers should be high enough to move around the rolls without breaking, even when the polymerization is completed.

Preferably a temperature in the range of from 150° to 300°C is maintained in the polymerization oven, more preferably the range being of from 200° to 270° C. In the case nylon-6 is the thermoplastic polymer, the temperature is advantageously in the range of from 220° to 250° C.

The reaction oven can be in one or several sections with different temperatures. For example, in the case of fibers coated with Nylon-6, in a first section of the oven the temperature can be maintained at about 200° C, in a second section 220°C and in a third section 250°C. The polymerization oven functionally compares to the polymerization die in a conventional pultrusion arrangement. The oven in fact amounts to a "die-less" polymerization sequence. Numerous, cumulatively significant advantages are attached to so proceeding. In addition to creating possibilities for increasing line speed and consequently production capacity, the die-less polymerization arrangement is eminently more flexible than and not handicapped by known physical strains attached to a die-polymerization step in a pultrusion sequence.

Since it is preferable to have the polymerization substantially completed inside the oven, at a given rate of polymerization, the length of the impregnated fiber inside the oven is directly proportional to the speed with which such fibers can be progressed through the oven.

For example, at a polymerization rate of 1 minute, with 1 meter of fibers inside the oven, the maximum pulling rate will preferably be 1 meter per minute. If the length of the fibers inside the oven is 10 meters, then the pulling speed may, for an identical rate of 1 minute, be increased up to 10 meters per minute.

The ratio of the effective distance covered by impregnated material in the oven to the linear length of the oven is preferably greater than 1.5, more preferably greater than 3.

This distances ratio varies depending upon the choice of the reinforcing material, the monomers, the catalyst and initiator as well as depending upon the configuration of the reinforcing material polymer combination. The optimization and final selection of the ratio can accordingly be set based on routine measures and selections.

Optionally, the coated fibers, after leaving or when leaving the polymerization oven, may be formed in a shaping zone. The forming can be done using shaping dies, shaping rolls or other means such as compression presses.

Shaping dies can be used to form rovings into round strands which could be cut to pellets. Such pellets can, possibly subject to the addition of supplementary resin, be used in injection molding or other secondary operations.

With a shaping die many fibers (rovings, filaments..) can be squeezed together to make a final shape (e.g. a larger profile).

The shaping die may also comprise a standard coextrusion or coating zone to cover the thermoplastic pultruded profile with a thermoplastic or other coating. Shaping rolls can be used to make simple forms and are more suitable for flat sheets and strips. Coextrusion and lamination can also be done before passing through the shaping rolls.

Moving compression presses can be used like in the standard pull forming processes.

Coated fibers leaving the polymerization zone or the forms leaving the shaping zone, after cooling, can be rolled in bobbins or cut or chopped into prepregs for use in injection mouldings .

### Description of the drawing

The invention will be better understood when reference is made to the attached drawing which illustrates the process.

Catalyst A, monomer B and initiator C from corresponding feed tanks are mixed and injected into chamber 1 which is a zone where the incoming fibers 2, unwound from one or several spools by a puller mechanism (not illustrated), possibly located after the polymerization zone, are coated according to well-known techniques.

After impregnation by the above reactive mixture the fibers 2 are pulled through a polymerization oven 3 where the path is determined by guiding rolls 4. After leaving the polymerization oven, the coated fibers may be coextruded in a shaping die 5 to provide profiles 6.

### Examples

### Example 1

In Example 1 below the monomer used was caprolactam having a melting point of about 69°C; the initiator used was isophthaloyl bis caprolactam; and the catalyst used was a magnesium bromide caprolactam adduct with a melting point of about 70°C.

The magnesium bromide adduct of caprolactam was obtained at a concentration of 1.0 moles of magnesium bromide per kilogram of caprolactam or about 21.6 wt. % of adduct with 78.4 wt. % of caprolactam.

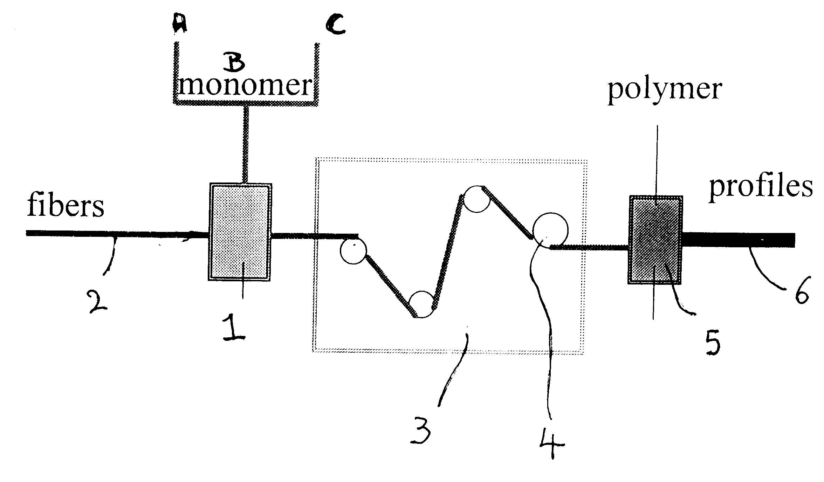

Referring to Fig. 1, Feed tanks A and B which have a capacity of about 25 liters and which are equipped with agitation, heating, pumping and metering means were charged as follows :

| Feed Tank A | wt.% |
|---|---|
| initiator | 1.2 |
| monomer | 48.8 |

| Feed Tank B | |
|---|---|
| catalyst | 8.7 |
| monomer | 41.3 |

All of the components are solid waxy flakes at room temperature. The feed tanks and feed lines were maintained above 80°C to keep the monomer molten. The materials in the feed tanks were agitated and the tanks were blanketed with water-free nitrogen. The glass fibers used were 1 roving of 2400 TEX from Owens Corning Fiberglass.

Molten solutions of Feeds A and B were pumped to a mixing zone. The reaction mixture was conveyed through a static mixer (not shown) and into the impregnation zone 1. The glass fibers 2 were heated to about 250°C in the fiber heating zone prior to being introduced into the impregnation zone 1 where the fibers are wetted and impregnated with the resin forming reaction mixture.

The impregnation of the roving was done using impregnating rolls. The small excess of reactive monomers was eliminated by wiping off the roving just before the entrance into the oven.

Then the impregnated reinforcing material was conveyed into the polymerization oven 3. The polymerization oven used was 2.1 m long and was fitted with heaters and thermocouples to control temperature. The polymerization oven temperature was 290-300°C at the beginning and then reduce to 250°C to minimize fumes. A nitrogen blanket in the oven is used to avoid oxygen and moisture. The strand passed 3 times in the oven using reversing rollers.

The strand was guided and shaped at the exit of the polymerization oven. The line speed was measured to be about 10 meters per minute which was the maximum speed of the puller. The glass content of the strand was about 15% by wt. The strand were examined for surface appearance, feel to the touch, flexibility by manually bending. The strands containaing 65% by volume of the glass fibers.

### Example 2

In all respects identical to Example 1 except that the glass fibers used are 1200 TEX.

### Example 3

In all respect identical to Example 1 except that a line speed of 24 meters/minute is used.

## Claims

1. A continuous process for the manufacture of reactively pultruded articles containing a fiber reinforcing material, in an amount of from 50 volume % to 75 volume %, expressed in relation to 100% being the sum of the reinforcing material and the thermoplastic polymer resin in the pultruded article, within a thermoplastic polymer matrix whereby the reinforcing material is impregnated, in a coating zone, with a reactive thermoplastic polymer matrix forming mixture whereafter the impregnated reinforcing material is progressed through a polymerization oven provided with guiding rolls yielding a non-linear movement of the impregnated reinforcing material during polymerization in the oven.

2. The process of Claim 1, wherein a temperature in the range of from 60° to 150°C is maintained in the coating zone.

3. The process of Claim 1 wherein a temperature in the range of from 150° to 300°C is maintained in the polymerization oven.

4. The process of Claim 1 wherein the thermoplastic polymer is a polyamide.

5. The process of any of Claims 1, 2, 3 or 4 wherein the temperature in the coating zone is maintained in the range of from 80° to 150°C and in the polymerization oven is maintained in the range of from 200° to 270°C.

6. The process in accordance with any of Claims 1 and 5 wherein the ratio of : effective distance covered by impregnated material in oven : linear length of oven is greater than 1,5.

7. The process in accordance with any of Claim 5 or 6 wherein the thermoplastic polymer is a polyamide which is based on caprolactame, optionally in combination with a polyamide modifier, the temperature in the coating zone is in the range of from 100° to 130°C, the temperature in the polymerization oven is in the range of from 220° to 250°C and wherein the distance ratio is greater than 3.

8. The process in accordance with Claim 7 wherein the polyamide is nylon-6 (PA-6).

9. The process in accordance with Claim 1 wherein the fiber reinforcing material is used in an amount of from 60 volume % to 70 volume %.
